# EUROPEAN PATENT APPLICATION

(11) **EP 2 469 984 A2**
(43) Date of publication of application: **27.06.2012**
(21) Application number: 11195073.9
(22) Date of filing: 22.12.2011
(51) Int. Cl.: H05B 33/08

(54) **Light emitting diode retrofit system for fluorescent lighting systems**

(30) Priority: 22.12.2010 US 976185
(71) Applicant: Osram Sylvania Inc., Danvers, MA 01923 (US)
(72) Inventor: Antony, Biju, Lynnfield, MA Massachusetts 01940 (US); Bakre, Shashank, Woburn, MA Massachusetts 01801 (US)
(74) Representative: Viering, Jentschura & Partner

(57) **Abstract**

An light emitting diode (LED) retrofit system (106) for fluorescent lighting systems including a fluorescent lamp fixture (104) is disclosed. The fluorescent lamp fixture (104) includes a frame (112), an existing ballast (114) configured to be coupled to an AC power source, and at least one connector (108, 110) coupled to an output of the existing ballast (114). The connector (108, 110) is configured to be coupled to a fluorescent lamp. The LED retrofit system (106) includes at least one pin (122a-n) configured to be removably coupled to the connector (108, 110), and to receive a high voltage AC signal from the existing ballast (114). The LED retrofit system (106) includes at least one LED light source (120), transformer circuitry (116) coupled to the pin (122a-n) and configured to receive the high voltage AC signal and to output a low voltage AC signal, and rectifier circuitry (118) configured to receive the low voltage AC signal and generate a DC voltage to drive the LED light source (120).

## Description

### TECHNICAL FIELD

The present application relates to solid state lighting sources, and in particular to a light emitting diode (LED) retrofit system for fluorescent lighting systems.

### BACKGROUND

Fluorescent lighting is widely used in many applications. One type of fluorescent lighting system includes a fluorescent lamp fixture having a ballast coupled to an alternating current (AC) voltage source and a plurality of pins for electrically coupling one or more fluorescent lamps to the ballast. The ballast may be configured to provide a regulated AC power supply to the fluorescent lamps. While fluorescent lighting may be generally more efficient than incandescent lighting, fluorescent lighting does suffer from several drawbacks. One drawback is that many fluorescent lamps utilize hazardous or toxic materials, such as phosphorous, mercury, etc., which may create environmental issues. Another drawback is that the lifespan of fluorescent lamps may be significantly shortened in applications in which the lamp is frequently switched on and off.

### SUMMARY

Generally, the present disclosure provides systems and methods for retrofitting one or more light emitting diode (LED) light sources to a fluorescent lighting fixture. In particular, a LED retrofit system including an LED light source may be electrically coupled to the existing pins of a fluorescent lighting fixture. The LED retrofit system may receive a high voltage AC input from a ballast associated with the fluorescent lighting fixture. The LED retrofit system may include transformer circuitry to provide isolation and to step down the high voltage AC to a lower AC voltage suitable for driving an LED light source of the LED retrofit system. A rectifier may then convert the lower voltage AC to a lower direct current (DC) voltage. The output of the rectifier, which may have an amount of AC rippling, may optionally be smoothed, e.g. through the use of a smoothing capacitor or the like.

Advantageously, the systems and methods of the present disclosure may allow a fluorescent lighting fixture to be retrofitted to power an LED light source without requiring any modification of the fluorescent lighting fixture. Additionally, the systems and methods of the present disclosure may provide high efficiency that is close to the ballast efficiency. In addition, the systems and methods of the present disclosure may offer reduced component count and/or size which may translate to increased power factor efficiency, and significant cost savings over conventional LED driving systems, and/or may make the LED retrofit system suitable for a wider range of applications. Moreover, the systems and methods of the present disclosure may include transformer circuitry to provide isolation of the ballast output, which may reduce and/or eliminate any potential electrical shocks or hazards during installation and which may allow for a broader choice of optical components in the design.

In an embodiment, there is provided a light emitting diode (LED) retrofit system for use with a fluorescent lamp fixture having an existing ballast. The LED retrofit system includes at least one LED light source; transformer circuitry configured to receive a high voltage AC signal from the existing ballast and to output a low voltage AC signal; rectifier circuitry configured to receive the low voltage AC signal and generate a DC voltage to drive the LED light source; and at least one pin configured to electrically couple the transformer circuitry to the existing ballast; the LED retrofit system being configured to be removably coupled to the fluorescent lamp fixture.

In a related embodiment, the LED retrofit system may further include a support substrate having coupled thereto the at least one pin, the LED light source, the transformer circuitry, and the rectifier circuitry, wherein the at least one pin may be configured to removably couple the LED retrofit system to at least one connector of the fluorescent lamp fixture. In another related embodiment, the rectifier circuitry may include full wave bridge rectifier circuitry configured to generate a full wave rectified AC voltage from the low voltage AC signal from the transformer circuitry and a filtering capacitor in parallel with the LED light source; wherein the filtering capacitor may be configured to filter the full wave rectified AC voltage into the DC voltage to drive the LED light source. In yet another related embodiment, the transformer circuitry may include a transformer configured to provide a load for the existing ballast to operate at rated specifications of the existing ballast. In a further related embodiment, the transformer circuitry may include a transformer configured to provide a load of approximately 350 Ω. In another further related embodiment, the transformer may include a high frequency transformer configured to operate at 20 kHz or greater. In a further related embodiment, the high frequency transformer may include a primary winding and a secondary winding, the primary winding configured to receive the high voltage AC signal from the existing ballast and the secondary winding configured to provide the low voltage AC signal having a voltage based on the LED light source. In a further related embodiment, the primary side of the transformer may be tuned based on the inductance and operating frequency of a fluorescent lamp for which the existing ballast was rated.

In another related embodiment, the LED retrofit system may further include control circuitry configured to regulate power to the LED light source. In a further related embodiment, the control circuitry may include a controller, switch circuitry, and a temperature sensor, wherein the controller may be configured to receive a signal from the temperature sensor representative of a temperature of the LED light source and output a PWM signal to control a conduction state of the switch circuitry. In another further related embodiment, the control circuitry may include a controller, switch circuitry, and current sense circuitry, wherein the controller may be configured to receive a signal from the current sense circuitry representative of a current through the LED light source and output a signal to control a conduction state of the switch circuitry to prevent an over-current situation.

In another embodiment, there is provided a retrofit lighting system. The retrofit lighting system includes a fluorescent lamp fixture and a light emitting diode (LED) retrofit system configured to be removably coupled to the fluorescent lamp fixture. The fluorescent lamp fixture includes: a frame, an existing ballast configured to be coupled to an AC power source and to provide a high voltage AC signal configured to drive a fluorescent lamp, and at least one connector coupled to an output of the existing ballast, the at least one connector configured to be coupled to the fluorescent lamp. The LED retrofit system includes at least one pin configured to be removably coupled to the at least one connector and to receive the high voltage AC signal from the existing ballast; at least one LED light source; transformer circuitry coupled to the at least one pin and configured to receive the high voltage AC signal and to output a low voltage AC signal; and rectifier circuitry configured to receive the low voltage AC signal and generate a DC voltage to drive the LED light source.

In a related embodiment, the rectifier circuitry comprises full wave bridge rectifier circuitry configured to generate a full wave rectified AC voltage from the low voltage AC signal from the transformer circuitry and a filtering capacitor in parallel with the LED light source; wherein the filtering capacitor may be configured to filter the full wave rectified AC voltage into the DC voltage to drive the LED light source. In another related embodiment, the transformer circuitry may include a transformer configured to provide a load for the existing ballast to operate at rated specifications of the existing ballast. In a further related embodiment, the transformer comprises a primary winding and a secondary winding, the primary winding configured to receive the high voltage AC signal from the existing ballast and the secondary winding configured to provide the low voltage AC signal having a voltage based on the LED light source, wherein primary side of the transformer may be tuned based on the inductance and operating frequency of the fluorescent lamp.

In another related embodiment, the LED retrofit system may further include control circuitry comprising a controller, switch circuitry, and a temperature sensor, wherein the controller may be configured to receive a signal from the temperature sensor representative of a temperature of the LED light source and output a PWM signal to control a conduction state of the switch circuitry. In yet another related embodiment, the LED retrofit system further comprises control circuitry comprising a controller, switch circuitry, and a current sense circuitry, wherein the controller may be configured to receive a signal from the current sense circuitry representative of a current through the LED light source and output a signal to control a conduction state of the switch circuitry to prevent an over-current situation.

In an embodiment, there is provided a method of driving a LED light source using an existing ballast of a fluorescent lamp fixture. The method includes: receiving a high voltage AC signal from the existing ballast of the fluorescent lamp fixture; converting the high voltage AC signal into a low voltage AC signal using transformer circuitry; rectifying the low voltage AC signal to generate a rectified DC voltage using rectifier circuitry; and driving the LED light source with the DC voltage.

In a related embodiment, the step of rectifying may include a full wave bridge rectifier circuitry configured to generate a full wave rectified AC voltage from the low voltage AC signal from the transformer circuitry and a filtering capacitor in parallel with the LED light source; wherein the filtering capacitor may be configured to filter the full wave rectified AC voltage into the DC voltage to drive the LED light source; and wherein the transformer circuitry includes a transformer having a primary winding and a secondary winding, the primary winding configured to receive the high voltage AC signal from the existing ballast and the secondary winding configured to provide the low voltage AC signal having a voltage based on the LED light source, wherein the primary side of the transformer may be tuned based on the inductance and operating frequency of the fluorescent lamp for which the existing ballast was rated such that the transformer provides a load for the existing ballast to operate at rated specifications of the existing ballast.

### BRIEF DESCRIPTION OF THE DRAWINGS

The foregoing and other objects, features and advantages disclosed herein will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles disclosed herein.

FIG. 1 is a system diagram illustrating a retrofit lighting system including a LED retrofit system according to embodiments described herein.

FIG. 2 is a system diagram illustrating the LED retrofit system of FIG. 1 in more detail, according to embodiments described herein.

FIG. 3 is a circuit diagram illustrating a retrofit lighting system according to embodiments described herein.

FIG. 4 includes plots of current and voltage vs. time, illustrating performance of the retrofit lighting system shown in FIG. 3.

FIG. 5 is a circuit diagram illustrating an LED retrofit system according to embodiments described herein.

FIG. 6 is a block flow diagram illustrating a method according to embodiments described herein.

### DETAILED DESCRIPTION

The present disclosure is not intended to be limited to the specific forms set forth herein. It is understood that various omissions and substitutions of equivalents are contemplated as circumstances may suggest or render expedient. It should be understood that the phraseology and terminology used herein is for the purpose of description and should not be regarded as limiting.

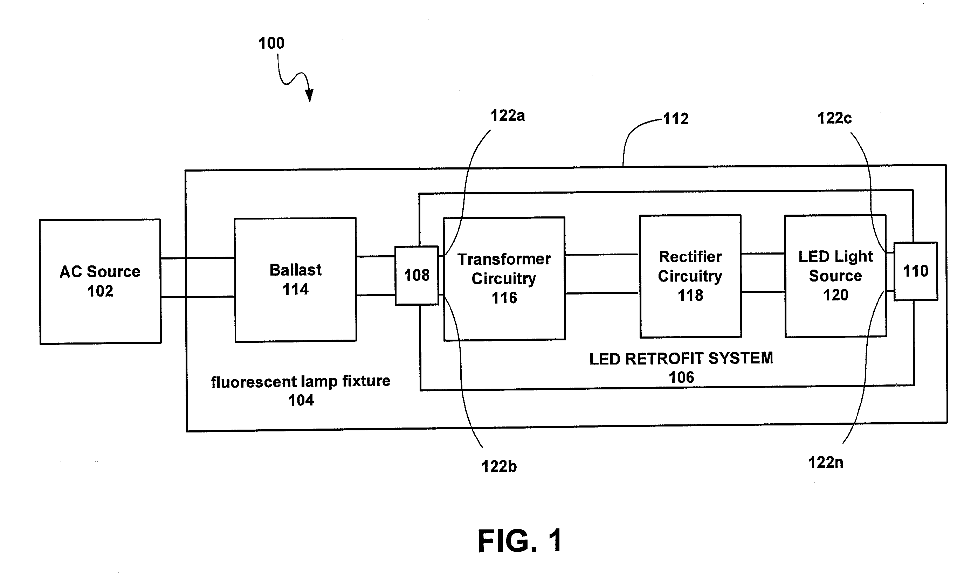

FIG. 1 is a system diagram illustrating a retrofit lighting system 100 according to embodiments described herein. In FIG. 1, the retrofit lighting system 100 includes an AC voltage source 102, a fluorescent lamp fixture 104, and an LED retrofit system 106. The AC voltage source 102 is configured to generate an AC voltage, e.g., a sinusoidal AC voltage. For example, the AC voltage source 102 may include a 120 VAC/60 Hz, 277 VAC/60 Hz, 204 VAC/60 Hz and/or 220V-240 VAC/50 Hz, 347 VAC/60 Hz power source. Those skilled in the art will recognize that other types of AC power sources 102 may be used to drive a retrofit lighting system 100.

The fluorescent lamp fixture 104 may include any fluorescent lamp fixture design and may include one or more connectors 108, 110 configured to mechanically and/or electrically connect with one or more fluorescent lamps (not shown). The connectors 108, 110 may be coupled to a frame 112 and may take any connector configuration for coupling with a fluorescent lamp, such as, but not limited to, a standard linear cylindrical tube T8, T10, T12 configuration, a U-shaped curved lamp configuration, a circular T5 lamp configuration, a compact fluorescent lamps (CFLs) configuration, a PL lamps configuration, etc.

The fluorescent lamp fixture 104 may also include one or more ballasts 114. The output of the ballast 114 may be coupled, either directly or indirectly, to one or more of the connectors 108, 110. The ballast 114 may be configured to provide proper voltage at the connectors 108, 110 to establish an arc between the electrodes of the fluorescent lamp (not shown) and to provide a controlled amount of electrical energy to the fluorescent lamp, i.e., to control the amount of current to the fluorescent lamp using a controlled voltage based on the designed operating specifications of the fluorescent lamp. For example, the ballast 114 may be configured to supply an output voltage in the range of 200-600 VAC (e.g., 400 VAC), operating at a frequency of 25 kHz to 100 kHz. The design of the ballast 114 may be determined, at least in part, based on the AC voltage source 102 and the number and types of fluorescent lamps. The ballast 114 may, for example, be configured as a magnetic ballast, an electronic ballast, and/or a hybrid ballast of a variety of types, such as but not limited to instant start, rapid start, and/or programmable ballasts. The ballast 114 may form an integral component with the frame 112 and/or may be removably coupled thereto, e.g., to allow replacement of the ballast 114.

The LED retrofit system 106 may be coupled to the ballast 114 through the connectors 108, 110. As shown in FIG. 1, the LED retrofit system 106 includes transformer circuitry 116, rectifier circuitry 118, an LED light source 120, and one or more electrical and/or mechanical connectors (e.g., pins 122a-n). The LED light source 120 may include one or more LEDs coupled to a support substrate 124. In some embodiments, for example, the LED light source 120 may include one or more arrays of multiple LEDs coupled in series or LED strips which may be simultaneously and/or independently controlled. The LEDs in the LED light source 120 may include any solid state light source and/or semiconductor light source such as, but not limited to, conventional high-brightness semiconductor LEDs, organic light emitting diodes (OLEDs), bi-color LEDs, tri-color LEDs, polymer light-emitting diodes (PLED), electroluminescent strips (EL), etc. The LEDs in the LED light source 120 may include, but are not limited to, packaged and non-packaged LEDs, chip-on-board LEDs, as well as surface mount LEDs. The LEDs may also include LEDs with phosphor or the like for converting energy emitted from the LED to a different wavelength of light.

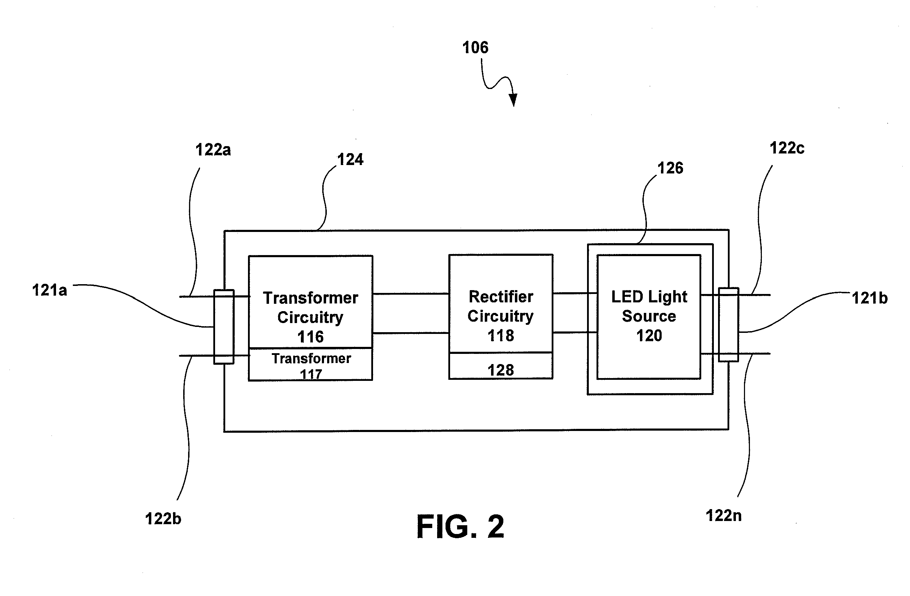

In addition to the LED light source 120, the transformer circuitry 116, the rectifier circuitry 118, and the pins 122a-n may all be coupled to the support substrate 124, such that the entire LED retrofit system 106 may be removably coupled to the connectors 108, 110 of the fluorescent lamp fixture 104. As further illustrated in FIG. 2, the pins 122a-n may be fitted with end caps 121a, 121b disposed at opposite ends of the support substrate 124. The end caps 121a-b may be configured to space the pins 122a-n such that the pins 122a-n mate (electrically and/or mechanically) with the connectors 108, 110 shown in FIG. 1. The overall size and/or shape of the LED retrofit system 106 (for example, the support substrate 124) may be equivalent to that of a standard fluorescent tube that the LED retrofit system 106 is intended to replace.

The support substrate 124, as shown in FIG. 2, may include one or more printed circuit boards (PCBs) and/or other substrates to which the transformer circuitry 116, the rectifier circuitry 118, the LED light source 120, and the pins 122a-n may be coupled. The support substrate 124 may optionally include one or more optics 126, such as but not limited to a diffuser, a lens, or the like. The optic 126 may be configured to shape the light provided by the LED light source 120 so that a desired viewing angle and/or distribution pattern is achieved. The optic 126 may be disposed about only a portion of the support substrate 124 (e.g., in an area proximate to the LED light source 120), may generally cover the entire support substrate 124, and/or may be disposed on each LED or a subset of LEDs within the LED light source 120.

Accordingly, while the LED retrofit system 106 may be removably coupled to the fluorescent lamp fixture 104, the LED retrofit system 106 is considered a separate and distinct component from the fluorescent lamp fixture 104. The LED retrofit system 106 may therefore be retrofitted into a fluorescent lamp fixture 104 that was designed to be used with a fluorescent lamp (not shown). The LED retrofit system 106 may thus function as a direct replacement light source for the original equipment fluorescent lamp fixture 104 without the need to remove the ballast 114 or to make modifications to the wiring of the existing (e.g., installed) fluorescent lamp fixture 104.

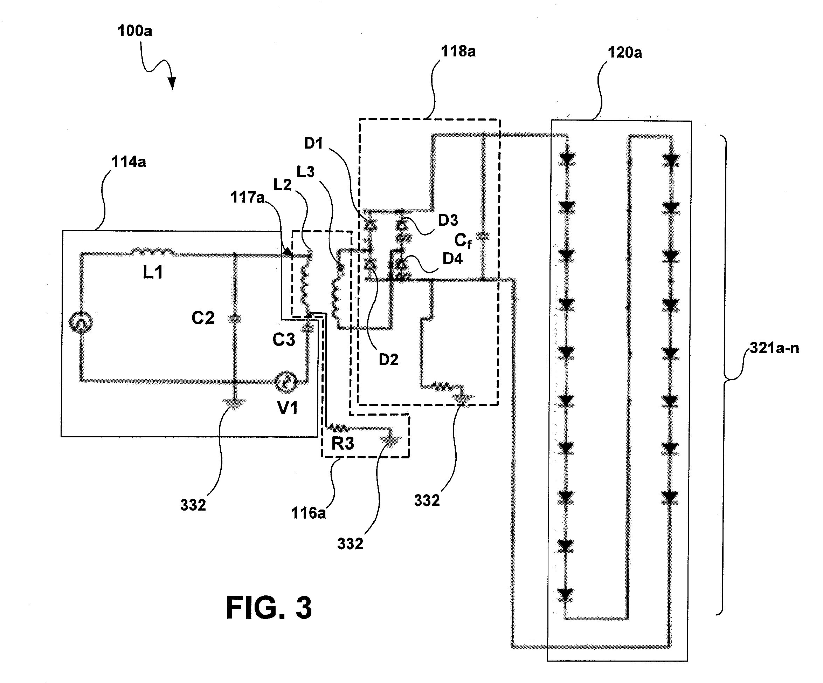

The transformer circuitry 116 may provide isolation of the high voltage output of the ballast 114 from the remainder of LED retrofit system 106. Providing such isolation may advantageously allow the transformer circuitry 116 to provide power to a broader range of components, e.g., LED light sources 120, while reducing and/or eliminating hazardous voltages in the remainder of the LED retrofit system 106 and reducing and/or eliminating crosstalk between various channels. In general, the transformer circuitry 116 may step down the high AC input voltage generated by the ballast 114 to a lower AC output voltage. The lower AC output voltage of the transformer circuitry 116 may depend upon, at least in part, the number and type of LEDs used in the LED light source 120. The transformer circuitry 116 may be coupled to the ground, thus eliminating a floating condition. Because the ballast 114 may operate at a high frequency (such as, but not limited to, at least 20 kHz, e.g., 40 kHz or more), the transformer circuitry 116 may include a high frequency transformer 117 configured to be compatible with the frequency of the ballast 114, as shown in FIG. 2. For example, the high frequency transformer 117 may be a known transformer configuration including ferrites that work efficiently at high frequency, e.g. 25 kHz to 100 kHz. In general, the transformer 117 may include a primary winding and one or more secondary windings (e.g. L2 and L3, respectively, as shown in FIG. 3) to achieve isolation of the high voltage output of the ballast 114 from the remainder of the LED retrofit system 106. The turn ratio between the primary and secondary windings may determine the voltage delivered by the transformer circuitry 116. Use of a high frequency transformer 117 may allow for reduced size of the transformer circuitry 116 and, in turn, reduced the size of the overall LED retrofit system 106.

The rectifier circuitry 118 may include any rectifier to convert the AC output from the transformer circuitry 116 into a DC output (or a form of DC output). For example, the rectifier circuitry 118 may include a full-wave rectifier. Optionally, the rectifier circuitry 118 may include a smoothing circuit or filter 128. The smoothing circuit/filter 128 may reduce the ripple associated with the full-wave rectifier 118 to produce a substantially stable DC voltage output from the AC voltage. For example, the smoothing circuit/filter 128 may include a reservoir capacitor or smoothing capacitor placed at the DC output of the rectifier 118. While the filter capacitor 128 may smooth the rectified DC voltage into a DC or quasi-DC signal, such a smoothed signal may still exhibit significant AC variations in relation to the peak-to-peak values of the AC source 102. Thus, to reduce or eliminate visually perceptible flicker due to the incomplete smoothing effect of the filter capacitor, filter capacitor 128 may be selected to have a time constant, based on, for example, the operating frequency of the AC source 102 and the required supply current to the LED light source 120. To further reduce this ripple, a known capacitor-input filter can be used. This may complement the reservoir capacitor with a choke (inductor) and a second filter capacitor, so that a steadier DC output can be obtained across the terminals of the filter capacitor 128.

Turning now to FIG. 3, there is shown a circuit diagram of a retrofit lighting system 100a. The retrofit lighting system 100a may include ballast circuitry 114a, transformer circuitry 116a, rectifier circuitry 118a, and a LED light source 120a. The ballast circuitry 114a may be an existing ballast associated with a fluorescent lighting system. As used herein, the phrase "existing ballast" is intended to refer to a ballast which was designed and/or sold for use with a fluorescent lamp of a fluorescent lighting system, not for a LED-based lighting system. The ballast circuitry 114a may include one or more inductors L1 and ballast capacitors C1, C2 electrically coupled to an AC signal V1, for example, a 120 V/60 Hz AC signal. The ballast circuitry 114a (e.g., an existing ballast) may be designed to operate at a specified frequency and load, such as, but not limited to, 40 kHz and 350 ohms at 600 VAC, based on the fluorescent lamp configuration it is intended to drive. The ballast circuitry 114a may be designed based on standard, generally accepted operating parameters established for fluorescent lamps, for example, by the Underwriters Laboratories, Inc. (UL), United States Occupational Safety and Health Administration (OSHA), CE mark, industry standards, or the like.

The output of the ballast circuitry 114a may be coupled to the transformer circuitry 116a, e.g. through connectors, such as the connectors 108, 110 shown in FIG.1. The transformer circuitry 116a may include a high frequency transformer 117a including a primary winding L2 and a secondary winding L3. In particular, the output of the ballast circuitry 114a may be received by the primary side winding L2, which, in combination with the secondary winding L3, may step down the AC voltage from the ballast circuitry 114a to a lower AC voltage on the secondary winding L3. The turn ratio between the primary and secondary windings L2, L3 may determine the voltage delivered by the transformer circuitry 116a, and may be based on, at least in part, the minimum voltage necessary to drive the LED light source 120a.

The transformer circuitry 116a may be configured to be compatible with the design specifications of the ballast circuitry 114a. For example, the transformer circuitry 116a may be configured to provide a load to the ballast circuitry 114a that approximates the load the that the ballast circuitry 114a was designed to drive in order to deliver maximum power (e.g., but not limited to, 350 ohms at 40 kHz). The transformer circuitry 116a may also be configured to operate at and/or near the operating frequency of the ballast circuitry 114a (e.g., but not limited to, 40 kHz). The primary winding L2 of the transformer circuitry 116a may optionally be coupled to the ground 332, for example, through a resistor R3.

The rectifier circuitry 118a may be coupled to the output of the transformer circuitry 116a and may be configured to rectify and filter the AC output of the transformer circuitry 116a. As shown in FIG. 3, the rectifier circuitry 118a includes four diodes D1-D4 arranged in a full-wave bridge to rectify the AC output of the transformer circuitry 116a into a full-wave-rectified DC output. This arrangement is known as a full wave rectifier, and may be referred to herein as either a full wave bridge, FWB or full wave rectifier. A filter capacitor C_{f} may be provided to filter the rectified DC output of the full wave rectifier and generate a DC or quasi-DC output with reduced ripple. While the filter capacitor C_{f} may smooth the rectified DC output into a DC or quasi-DC signal, such a smoothed signal may still exhibit significant AC variations in relation to the peak-to-peak values of an AC source providing power to the system, such as the AC source 102 shown in FIG. 1. Thus, to reduce or eliminate visually perceptible flicker due to the incomplete smoothing effect of the filter capacitor C_{f}, the filter capacitor C_{f} may be selected to have a time constant, based on, for example, the operating frequency of the AC source and the required supply voltage for driving the LED light source 120a.

In FIG. 3, the LED light source 120a includes a plurality of LEDs 321a-n connected in series across the DC output of the rectifier circuitry 118a, i.e. across the filter capacitor C_{f}. The output of the rectifier circuitry 118a may thus drive the LEDs 321a-n, causing the LEDs 321 a-n to emit light. The LED light source 120a may optionally be coupled to ground 332, which may include, for example, a system MAINS ground and/or common (earth) ground. Coupling the LED light source 120a to the ground 332 may prevent the LED light source 120a from being in a "floating" state, which may reduce or eliminate electro-magnetic interference (i.e., noise) emanated or received by the LED light source 120a. While a single LED light source 120a is shown, the LED light source 120a may include a plurality of LED light sources 120a, each of which may contain a different number and/or type of LEDs 321a-n. For example, the transformer circuitry 116a may include a plurality of secondary windings L3 configured to drive a plurality of LED channels (e.g., a plurality of LED light sources 120a) from a single AC voltage source V1, and each LED channel may be provided with its own rectifier circuit 118a.

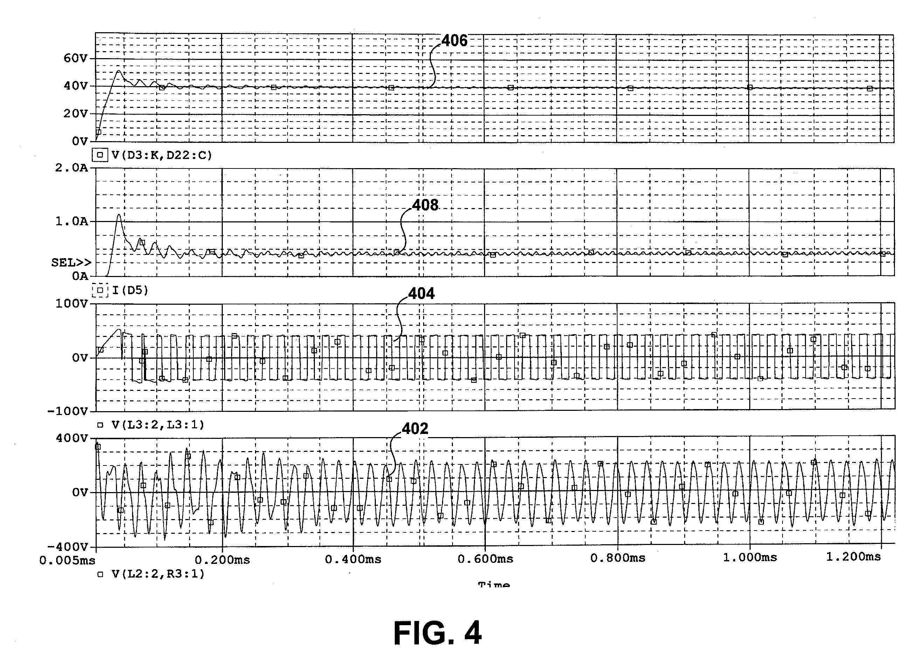

FIG. 4 includes plots 402, 404, 406, 408 of current and voltage vs. time, illustrating performance of the retrofit lighting system 100a illustrated in FIG. 3. In particular, the plot 402 illustrates an exemplary output of the ballast circuitry 114a shown in FIG. 3. As shown, the voltage at the output of the ballast circuitry may be approximately 200 VAC (400 VAC peak-to-peak). The plot 404 illustrates the output of the transformer circuitry 116a, i.e., the output of the secondary winding L3, in response to the ballast circuitry output voltage illustrated in the plot 402. As shown, the voltage at the output of the transformer circuitry may be approximately 40 VAC. The plot 406 illustrates the output of the rectifier circuitry 118a, i.e., the rectified DC voltage to the LED light source 120a, in response to the transformer circuitry 116a output voltage illustrated in the plot 404. As shown, the voltage at the output of the rectifier circuitry 118a may be approximately 40 VDC. The plot 408 illustrates the current drawn by the LED light source 120a in response to the rectifier circuitry 118a output voltage illustrated in the plot 406. As shown, the retrofit lighting system 100a may provide a substantially constant voltage and/or current to drive the LED light source 120a using existing ballast circuitry 114a.

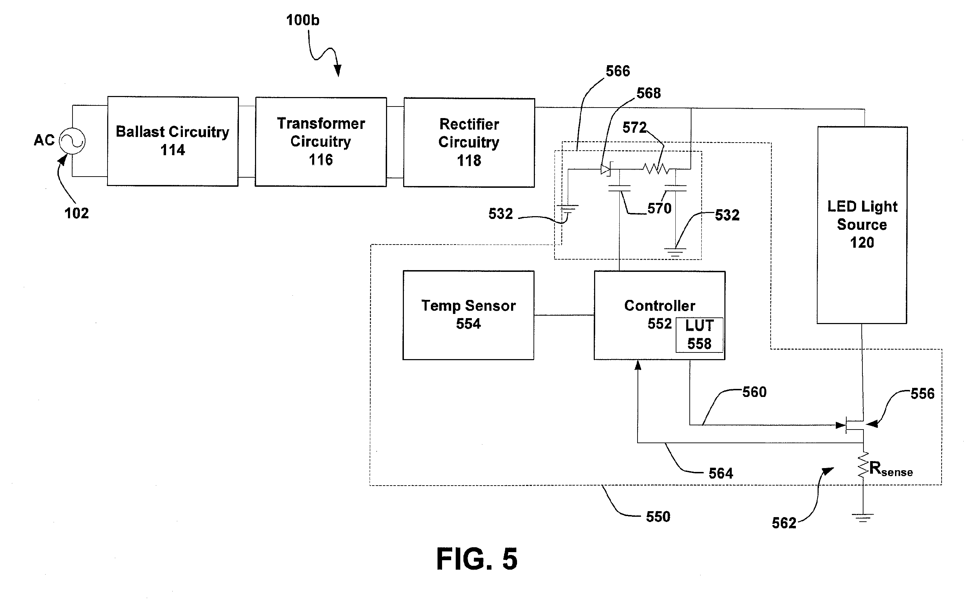

FIG. 5 illustrates a retrofit lighting system 100b. The illustrated retrofit lighting system 100b includes ballast circuitry 114, transformer circuitry 116, rectifier circuitry 118, and a LED light source 120, all configured as described above in connection with FIGs. 1-3. The retrofit lighting system 100b also includes control circuitry 550. The control circuitry 550 may be configured to control the power to the LED light source 120. For example, the control circuitry 550 may be configured to control the power delivered to the LED light source 120 in the event of an over-current situation, e.g., to prevent damage to the LED light source 120, and/or to compensate for temperature changes of the LED light source 120, e.g., to provide a constant overall brightness (luminosity) from the LED light source 120. In some embodiments, the control circuitry 550 may include a controller 552, a temperature sensor 554, and switch circuitry 556. The controller 552 may include a processor, microcontroller, application specific integrated circuit (ASIC), or the like, configured to receive a signal from the temperature sensor 554 that is representative of the temperature of the LED light source 120, e.g., the temperature of the LEDs within LED light source 120 and/or the ambient temperature proximate to the LED light source 120. The controller 552 may then compare this signal to a value stored in a look-up table (LUT) 558 and generate a pulse-width modulated (PWM) signal 560 based on the difference to control the conduction state of the switch circuitry 556. While the switch circuitry 556 is depicted as a generalized switching circuit, those skilled in the art will recognize that the switch circuitry 556 may include an FET switch (e.g., but not limited to, a MOSFET), BJT switch or other circuitry capable of switching conduction states.

As is known, the PWM signal 560 generated by the controller 552 may have a controllable duty cycle to control the brightness and/or color of the LED light source 120. For example, assuming a 50% duty cycle, drive current is delivered to the LED light source 120 during the ON time of the switch circuitry 556 and interrupted during the OFF time of the switch circuitry 556. To control the overall brightness of the light output from the LED light source 120, the duty cycle of the PWM signal 560 may be adjusted. For example, the duty cycle may range from 0% (switch is always open) to 100% (switch is always closed) to control the overall brightness (luminosity) and/or color of the LED light source 120. When the PWM signal 560 is ON (high), the switch circuitry 556 may close, thus creating a conduction path through the switch circuitry 556, the LED light source 120, and the rectifier circuitry 118. When the PWM signal 560 is OFF, the switch circuitry 556 may open thus decoupling the LED light source 120 and the switch circuitry 556 from the rectifier circuitry 118. Accordingly, the current flowing through the LED light source 120 may be regulated, thereby allowing the luminosity of the LED light source 120 to be corrected for temperature. The frequency of the PWM signal 560 may be selected to prevent visually perceivable flicker from the LED light source 120.

In addition or alternatively, the control circuitry 550 may include current sense circuitry 562. According to some embodiments, the current sense circuitry 562 may produce a signal 564 representative of the current flowing through the LED light source 120, for example, using a sense resistor Rₛₑₙₛₑ. The controller 552 may receive the signal 564 and compare this to one or more threshold values, e.g., one or more threshold values stored in the LUT 558. In the event that the signal 564 is greater than a first threshold value (e.g., an over-current situation), the controller 552 may generate a signal to open the switch circuitry 556. For example, the controller 552 may generate a PWM signal 560 having a duty cycle of 0%, causing the switch circuitry 556 to open, thereby decoupling the LED light source 120 and the switch circuitry 556 from the rectifier circuitry 118. Alternatively, the controller 552 may generate a simple on/off signal that may control the status of the switch circuitry 556.

The control circuitry 550 may include a power supply 566 configured to provide the necessary supply voltage required by the controller 552 and/or other components of the control circuitry 550. For example, the power supply 566 may include a known Zener diode voltage regulator configuration that may optionally include one or more Zener diodes 568, capacitors 570 and/or resistors 572 configured as shown to provide, for example, 5VDC or 3.3VDC output to the controller. As shown in FIG. 5, the controller 552 is coupled to ground 532, which may include, for example, a system MAINS ground and/or common (earth) ground. Coupling the controller 552 to the ground 532 may prevent the controller 552 from being in a "floating" state, which may reduce or eliminate harmonic noise in the switch 556 and enable finer control over the LED light source 120.

Of course, FIG. 5 only illustrates one example of control circuitry 550 that may be utilized, and those skilled in the art may recognize that other embodiments of the control circuitry 550 may be used. For example, the control circuitry 550 may be provided in circuitry other than a controller 552. Alternatively (or in addition), a photodetector may be disposed near the LED light source 120 to receive light and generate a feedback signal proportional to the light emitted by the LED light source 120. The controller 552 may be configured to compare the feedback signal to user-defined and/or preset values (e.g., stored in the LUT 558) to generate control signals to control the duty cycle of the PWM signal 560 generated by the controller 552 (or alternatively, a PWM circuitry) and, ultimately, the conduction state of the switch circuitry 556 to control the luminosity of the LED light source 120.

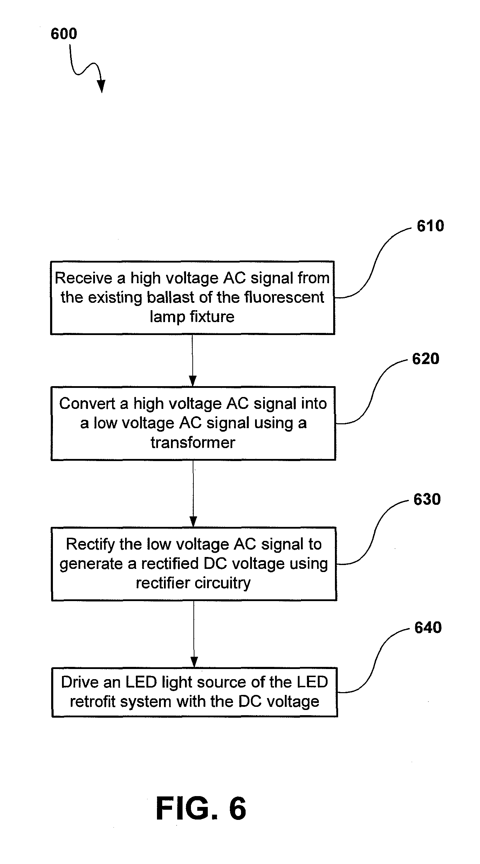

FIG. 6 shows a block flow diagram 600 of one method of driving an LED light source using an existing ballast of a fluorescent lamp fixture, according to embodiments described herein. The block flow diagram may be shown and described as including a particular sequence of steps. It is to be understood, however, that the sequence of steps merely provides an example of how the general functionality described herein may be implemented. The steps do not have to be executed in the order presented unless otherwise indicated.

In FIG. 6, a high voltage AC signal is received 610 from the existing ballast of the fluorescent lamp fixture. The high voltage AC signal is converted 620 into a low voltage AC signal using a transformer circuitry. The low voltage AC signal is rectified 630 to generate a rectified DC voltage using a rectifier circuitry. The LED light source is driven 640 by the DC voltage. In some embodiments, the method described may be implemented using a controller, e.g. controller 552 in FIG. 5, and/or other programmable device. To that end, methods according to embodiments described herein may be implemented on a tangible computer readable medium, having instructions stored thereon, that when executed by one or more processors, perform the methods. Thus, for example, the controller 552 in FIG. 5 may include a storage medium (not shown in FIG. 5) to store instructions (in, for example, firmware or software) to perform the operations described herein.

As used in any embodiment herein, "circuit" or "circuitry" may include, for example, singly or in any combination, hardwired circuitry, programmable circuitry, state machine circuitry, and/or firmware that stores instructions executed by programmable circuitry. In at least one embodiment, the circuits and/or circuitry described herein may collectively or individually include one or more integrated circuits. An "integrated circuit" may include a digital, analog or mixed-signal semiconductor device and/or microelectronic device, such as, for example, but not limited to, a semiconductor integrated circuit chip.

The methods and systems described herein are not limited to a particular hardware or software configuration, and may find applicability in many computing or processing environments. The methods and systems may be implemented in hardware or software, or a combination of hardware and software. The methods and systems may be implemented in one or more computer programs, where a computer program may be understood to include one or more processor executable instructions. The computer program(s) may execute on one or more programmable processors, and may be stored on one or more storage medium readable by the processor (including volatile and non-volatile memory and/or storage elements), one or more input devices, and/or one or more output devices. The processor thus may access one or more input devices to obtain input data, and may access one or more output devices to communicate output data. The input and/or output devices may include one or more of the following: Random Access Memory (RAM), Redundant Array of Independent Disks (RAID), floppy drive, CD, DVD, magnetic disk, internal hard drive, external hard drive, memory stick, or other storage device capable of being accessed by a processor as provided herein, where such aforementioned examples are not exhaustive, and are for illustration and not limitation.

The computer program(s) may be implemented using one or more high level procedural or object-oriented programming languages to communicate with a computer system; however, the program(s) may be implemented in assembly or machine language, if desired. The language may be compiled or interpreted.

As provided herein, the processor(s) may thus be embedded in one or more devices that may be operated independently or together in a networked environment, where the network may include, for example, a Local Area Network (LAN), wide area network (WAN), and/or may include an intranet and/or the internet and/or another network. The network(s) may be wired or wireless or a combination thereof and may use one or more communications protocols to facilitate communications between the different processors. The processors may be configured for distributed processing and may utilize, in some embodiments, a client-server model as needed. Accordingly, the methods and systems may utilize multiple processors and/or processor devices, and the processor instructions may be divided amongst such single- or multiple-processor/devices.

The device(s) or computer systems that integrate with the processor(s) may include, for example, a personal computer(s), workstation(s) (e.g., Sun, HP), personal digital assistant(s) (PDA(s)), handheld device(s) such as cellular telephone(s) or smart cellphone(s), laptop(s), handheld computer(s), or another device(s) capable of being integrated with a processor(s) that may operate as provided herein. Accordingly, the devices provided herein are not exhaustive and are provided for illustration and not limitation.

References to "a microprocessor" and "a processor" and "a controller", or "the microprocessor" and "the processor" and "the controller," may be understood to include one or more microprocessors that may communicate in a stand-alone and/or a distributed environment(s), and may thus be configured to communicate via wired or wireless communications with other processors, where such one or more processor may be configured to operate on one or more processor-controlled devices that may be similar or different devices. Use of such "microprocessor" or "processor" or "controller" terminology may thus also be understood to include a central processing unit, an arithmetic logic unit, an application-specific integrated circuit (IC), and/or a task engine, with such examples provided for illustration and not limitation.

Furthermore, references to memory and/or a storage medium, unless otherwise specified, may include one or more processor-readable and accessible memory elements and/or components that may be internal to the processor-controlled device, external to the processor-controlled device, and/or may be accessed via a wired or wireless network using a variety of communications protocols, and unless otherwise specified, may be arranged to include a combination of external and internal memory devices, where such memory may be contiguous and/or partitioned based on the application. Accordingly, references to a database may be understood to include one or more memory associations, where such references may include commercially available database products (e.g., SQL, Informix, Oracle) and also proprietary databases, and may also include other structures for associating memory such as links, queues, graphs, trees, with such structures provided for illustration and not limitation.

References to a network, unless provided otherwise, may include one or more intranets and/or the internet. References herein to microprocessor instructions or microprocessor-executable instructions, in accordance with the above, may be understood to include programmable hardware.

In various embodiments, a light emitting diode (LED) retrofit system for use with a fluorescent lamp fixture having an existing ballast is provided. The LED retrofit system may include: at least one LED light source; transformer circuitry configured to receive a high voltage AC signal from the existing ballast and to output a low voltage AC signal; rectifier circuitry configured to receive the low voltage AC signal and generate a DC voltage to drive the LED light source; and at least one pin configured to electrically couple the transformer circuitry to the existing ballast; the LED retrofit system being configured to be removably coupled to the fluorescent lamp fixture.

In various embodiments, the LED retrofit system may further include: a support substrate having coupled thereto the at least one pin, the LED light source, the transformer circuitry, and the rectifier circuitry, wherein the at least one pin is configured to removably couple the LED retrofit system to at least one connector of the fluorescent lamp fixture. In various embodiments, the rectifier circuitry may include: full wave bridge rectifier circuitry configured to generate a full wave rectified AC voltage from the low voltage AC signal from the transformer circuitry and a filtering capacitor in parallel with the LED light source; wherein the filtering capacitor is configured to filter the full wave rectified AC voltage into the DC voltage to drive the LED light source. In various embodiments, the transformer circuitry may include a transformer configured to provide a load for the existing ballast to operate at rated specifications of the existing ballast. In various embodiments, the transformer circuitry may include a transformer configured to provide a load of approximately 350 Ω. In various embodiments, the transformer may include a high frequency transformer configured to operate at 20 kHz or greater. In various embodiments, the high frequency transformer may include a primary winding and a secondary winding, the primary winding configured to receive the high voltage AC signal from the existing ballast and the secondary winding configured to provide the low voltage AC signal having a voltage based on the LED light source. In various embodiments, the primary side of the transformer may be tuned based on the inductance and operating frequency of a fluorescent lamp for which the existing ballast was rated. In various embodiments, the LED retrofit system may further include control circuitry configured to regulate power to the LED light source. In various embodiments, the control circuitry may include a controller, switch circuitry, and a temperature sensor, wherein the controller may be configured to receive a signal from the temperature sensor representative of a temperature of the LED light source and output a PWM signal to control a conduction state of the switch circuitry. In various embodiments, the control circuitry may include a controller, switch circuitry, and current sense circuitry, wherein the controller may be configured to receive a signal from the current sense circuitry representative of a current through the LED light source and output a signal to control a conduction state of the switch circuitry to prevent an over-current situation.

In various embodiments, a retrofit lighting system is provided. The retrofit lighting system may include: a fluorescent lamp fixture, which may include: a frame; an existing ballast configured to be coupled to an AC power source and to provide a high voltage AC signal configured to drive a fluorescent lamp; and at least one connector coupled to an output of the existing ballast, the at least one connector configured to be coupled to the fluorescent lamp; and a light emitting diode (LED) retrofit system configured to be removably coupled to the fluorescent lamp fixture. The LED retrofit system may include: at least one pin configured to be removably coupled to the at least one connector and to receive the high voltage AC signal from the existing ballast; at least one LED light source; transformer circuitry coupled to the at least one pin and configured to receive the high voltage AC signal and to output a low voltage AC signal; and rectifier circuitry configured to receive the low voltage AC signal and generate a DC voltage to drive the LED light source. In various embodiments, the rectifier circuitry may include full wave bridge rectifier circuitry configured to generate a full wave rectified AC voltage from the low voltage AC signal from the transformer circuitry and a filtering capacitor in parallel with the LED light source; wherein the filtering capacitor is configured to filter the full wave rectified AC voltage into the DC voltage to drive the LED light source. In various embodiments, the transformer circuitry may include a transformer configured to provide a load for the existing ballast to operate at rated specifications of the existing ballast. In various embodiments, the transformer may include a primary winding and a secondary winding, the primary winding configured to receive the high voltage AC signal from the existing ballast and the secondary winding configured to provide the low voltage AC signal having a voltage based on the LED light source, wherein primary side of the transformer is tuned based on the inductance and operating frequency of the fluorescent lamp. In various embodiments, the LED retrofit system may further include control circuitry including a controller, switch circuitry, and a temperature sensor, wherein the controller is configured to receive a signal from the temperature sensor representative of a temperature of the LED light source and output a PWM signal to control a conduction state of the switch circuitry. In various embodiments, the LED retrofit system may further include control circuitry including a controller, switch circuitry, and a current sense circuitry, wherein the controller is configured to receive a signal from the current sense circuitry representative of a current through the LED light source and output a signal to control a conduction state of the switch circuitry to prevent an over-current situation.

In various embodiments, a method of driving a LED light source using an existing ballast of a fluorescent lamp fixture is provided. The method may include: receiving a high voltage AC signal from the existing ballast of the fluorescent lamp fixture; converting the high voltage AC signal into a low voltage AC signal using transformer circuitry; rectifying the low voltage AC signal to generate a rectified DC voltage using rectifier circuitry; and driving the LED light source with the DC voltage.

In various embodiments, the step of rectifying may include: a full wave bridge rectifier circuitry configured to generate a full wave rectified AC voltage from the low voltage AC signal from the transformer circuitry and a filtering capacitor in parallel with the LED light source; wherein the filtering capacitor is configured to filter the full wave rectified AC voltage into the DC voltage to drive the LED light source; and wherein the transformer circuitry comprises a transformer having a primary winding and a secondary winding, the primary winding configured to receive the high voltage AC signal from the existing ballast and the secondary winding configured to provide the low voltage AC signal having a voltage based on the LED light source, wherein the primary side of the transformer is tuned based on the inductance and operating frequency of the fluorescent lamp for which the existing ballast was rated such that the transformer provides a load for the existing ballast to operate at rated specifications of the existing ballast.

The term "coupled" as used herein refers to any connection, coupling, link or the like by which signals carried by one system element are imparted to the "coupled" element. Such "coupled" devices, or signals and devices, are not necessarily directly connected to one another and may be separated by intermediate components or devices that may manipulate or modify such signals.

Reference in the specification to "one embodiment" or "an embodiment" of the present disclosure means that a particular feature, structure or characteristic described in connection with the embodiment is included in at least one embodiment of the present disclosure. Thus, the appearances of the phrase "in one embodiment" appearing in various places throughout the specification are not necessarily all referring to the same embodiment.

The terms "first," "second," and the like herein do not denote any order, quantity, or importance, but rather are used to distinguish one element from another, and the terms "a" and "an" herein do not denote a limitation of quantity, but rather denote the presence of at least one of the referenced item.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" and/or "an" and/or "the" to modify a noun may be understood to be used for convenience and to include one, or more than one, of the modified noun, unless otherwise specifically stated. The terms "comprising", "including" and "having" are intended to be inclusive and mean that there may be additional elements other than the listed elements.

Elements, components, modules, and/or parts thereof that are described and/or otherwise portrayed through the figures to communicate with, be associated with, and/or be based on, something else, may be understood to so communicate, be associated with, and or be based on in a direct and/or indirect manner, unless otherwise stipulated herein.

Although the methods and systems have been described relative to a specific embodiment thereof, they are not so limited. Obviously many modifications and variations may become apparent in light of the above teachings. Many additional changes in the details, materials, and arrangement of parts, herein described and illustrated, may be made by those skilled in the art.

## Claims

1. A light emitting diode (LED) retrofit system (106) for use with a fluorescent lamp fixture (104) having an existing ballast (114), the LED retrofit system (106) comprising:
at least one LED light source (120);
transformer circuitry (116) configured to receive a high voltage AC signal from the existing ballast (114) and to output a low voltage AC signal;
rectifier circuitry (118) configured to receive the low voltage AC signal and generate a DC voltage to drive the LED light source (120); and
at least one pin (122a-n) configured to electrically couple the transformer circuitry (116) to the existing ballast (114);
the LED retrofit system (106) being configured to be removably coupled to the fluorescent lamp fixture (104).

2. The LED retrofit system (106) of claim 1, further comprising:
a support substrate having coupled thereto the at least one pin (122a-n), the LED light source (120), the transformer circuitry (116), and the rectifier circuitry (118), wherein the at least one pin (122a-n) is configured to removably couple the LED retrofit system (106) to at least one connector (108, 110) of the fluorescent lamp fixture (104).

3. The LED retrofit system (106) of claim 1, wherein the rectifier circuitry (118) comprises:
full wave bridge rectifier circuitry (118) configured to generate a full wave rectified AC voltage from the low voltage AC signal from the transformer circuitry (116) and a filtering capacitor in parallel with the LED light source (120);
wherein the filtering capacitor is configured to filter the full wave rectified AC voltage into the DC voltage to drive the LED light source (120).

4. The LED retrofit system (106) of claim 1, wherein the transformer circuitry (116) comprises a transformer configured to provide a load for the existing ballast (114) to operate at rated specifications of the existing ballast (114).

5. The LED retrofit system (106) of claim 4, wherein the transformer circuitry (116) comprises a transformer configured to provide a load of approximately 350 Ω.

6. The LED retrofit system (106) of claim 4, wherein the transformer comprises a high frequency transformer configured to operate at 20 kHz or greater.

7. The LED retrofit system (106) of claim 6, wherein the high frequency transformer comprises a primary winding and a secondary winding, the primary winding configured to receive the high voltage AC signal from the existing ballast (114) and the secondary winding configured to provide the low voltage AC signal having a voltage based on the LED light source (120).

8. The LED retrofit system (106) of claim 7, wherein the primary side of the transformer is tuned based on the inductance and operating frequency of a fluorescent lamp for which the existing ballast (114) was rated.

9. The LED retrofit system (106) of claim 1, further comprising control circuitry configured to regulate power to the LED light source (120).

10. The LED retrofit system (106) of claim 9, wherein the control circuitry comprises a controller, switch circuitry, and a temperature sensor, wherein the controller is configured to receive a signal from the temperature sensor representative of a temperature of the LED light source (120) and output a PWM signal to control a conduction state of the switch circuitry.

11. The LED retrofit system (106) of claim 9, wherein the control circuitry comprises a controller, switch circuitry, and current sense circuitry, wherein the controller is configured to receive a signal from the current sense circuitry representative of a current through the LED light source (120) and output a signal to control a conduction state of the switch circuitry to prevent an over-current situation.

12. A retrofit lighting system (100), comprising:
a fluorescent lamp fixture (104) comprising:
a frame (112);
an existing ballast (114) configured to be coupled to an AC power source and to provide a high voltage AC signal configured to drive a fluorescent lamp; and
at least one connector (108, 110) coupled to an output of the existing ballast (114), the at least one connector (108, 110) configured to be coupled to the fluorescent lamp; and
an LED retrofit system (106) of claim 1,
wherein the at least one pin (122a-n) is configured to be removably coupled to the at least one connector (108, 110) and to receive the high voltage AC signal from the existing ballast (114);
wherein the transformer circuitry (116) is coupled to the at least one pin (122a-n).

13. The retrofit lighting system (106) of claim 12,
wherein primary side of the transformer is tuned based on the inductance and operating frequency of the fluorescent lamp.

14. A method of driving a LED light source (120) using an existing ballast (114) of a fluorescent lamp fixture (104), the method comprising:
receiving a high voltage AC signal from the existing ballast (114) of the fluorescent lamp fixture (104);
converting the high voltage AC signal into a low voltage AC signal using transformer circuitry (116);
rectifying the low voltage AC signal to generate a rectified DC voltage using rectifier circuitry (118); and
driving the LED light source (120) with the DC voltage.

15. The method of claim 14, wherein the step of rectifying comprises:
a full wave bridge rectifier circuitry (118) configured to generate a full wave rectified AC voltage from the low voltage AC signal from the transformer circuitry (116) and a filtering capacitor in parallel with the LED light source (120);
wherein the filtering capacitor is configured to filter the full wave rectified AC voltage into the DC voltage to drive the LED light source (120); and
wherein the transformer circuitry (116) comprises a transformer having a primary winding and a secondary winding, the primary winding configured to receive the high voltage AC signal from the existing ballast (114) and the secondary winding configured to provide the low voltage AC signal having a voltage based on the LED light source (120), wherein the primary side of the transformer is tuned based on the inductance and operating frequency of the fluorescent lamp for which the existing ballast (114) was rated such that the transformer provides a load for the existing ballast (114) to operate at rated specifications of the existing ballast (114).
